Europäisches Patentamt

European Patent Office

Office européen des brevets

(11) Veröffentlichungsnummer : **0 109 459**
**B1**

(12) **EUROPÄISCHE PATENTSCHRIFT**

(45) Veröffentlichungstag der Patentschrift :
05.03.86

(51) Int. Cl.⁴ : **B 65 G 35/06**, B 61 B 13/12

(21) Anmeldenummer : **82110796.8**

(22) Anmeldetag : **23.11.82**

(54) **Fördersystem mit einem sich auf Kugelrollen abstützenden Transportelement.**

(43) Veröffentlichungstag der Anmeldung :
30.05.84 Patentblatt 84/22

(45) Bekanntmachung des Hinweises auf die Patenterteilung : 05.03.86 Patentblatt 86/10

(84) Benannte Vertragsstaaten :
DE GB IT

(56) Entgegenhaltungen :
CH-A-   534 627
DE-A- 1 808 337
DE-A- 2 839 330
FR-A- 1 436 482
FR-A- 2 123 431
GB-A- 1 272 263
US-A- 2 469 575
US-A- 3 565 233

(73) Patentinhaber : **CARL SCHENCK AG**
**Landwehrstrasse 55 Postfach 40 18**
**D-6100 Darmstadt (DE)**

(72) Erfinder : **Storck, Karlheinz, Dr.**
**Schumannstrasse 10**
**D-6100 Darmstadt (DE)**

(74) Vertreter : **Dallhammer, Herbert, Dipl.-Ing.**
**CARL SCHENCK AG Patentabteilung Postfach 4018**
**Landwehrstrasse 55**
**D-6100 Darmstadt (DE)**

## Beschreibung

Die Erfindung betrifft ein Fördersystem mit einem sich auf Kugelrollen abstützenden Transportelement und einem die Kugelrollen führenden Schienensystem, wobei bei Verwendung von mehr als vier Kugelrollen (3, 3', 4, 4', 8, 8') diese auf mindestens drei Bahnen verteilt sind und im Bereich von vorgesehenen Abzweigungen innerhalb des Schienensystems Führungen für mindestens zwei Kugelrollen vorgesehen sind und das Transportelement (2) antreibbar ist.

Solche Fördersysteme zum Transport von Transportelementen sind aus DE-A-1 808 337 bekannt Dort wird zur Führung von Transportwagen und zum rechtwinkligen Abzweigen von seiner Fahrtrichtung dieser auf Kugeln rollbar gelagert und auf Schienen bewegt, die aus einer Laufschiene und beiderseits davon angeordneten Führungsschienen bestehen. Eine derartige Einrichtung ist im Bereich von Umlenkungen instabil, so daß die gewünschte Zielrichtung nicht eingehalten werden kann, die Rollen können gleichzeitig in verschieden gerichtete Schienen einfahren. Durch die DE-OS-28 39 330 ist ein gattungsgemäßes Fördersystem mit den eingangs genannten Merkmalen bekannt geworden, wobei drei Rollen je Schiene in Fahrtrichtung in Reihe hintereinander angeordnet sind. Hierdurch wird bei zu überfahrenden Kreuzungen im Hinblick auf die gewünschte Zielrichtung eine Stabilisierung erreicht, jedoch sind hierbei nur geradlinige Bewegungen eines Transportwagens möglich. Durch die CH-A-534 627 ist eine Führungseinrichtung mit einem ebenen Führungstisch und mindestens einem an diesem in eine Umlaufbahn geführten Schlitten bekannt geworden, wobei am Führungstisch eine innere und eine äußere Führungsbahn ausgebildet sind, die zwischen sich einen endlosen Führungsdurchlaß begrenzen, dessen Mittellinie aus zwei parallelen, geradlinigen und zwei halbkreisförmigen Abschnitten zusammengesetzt ist und der auf seiner ganzen Länge eine gleichmäßige Weite hat und wobei am Schlitten vier einen einheitlich großen Durchmesser besitzende Laufrollen in solcher Anordnung ihrer Drehachsen gelagert sind, daß sie paarweise mit der inneren bzw. der äußeren Führungsbahn zusammen arbeiten und zwar spielfrei wenn sich der Schlitten ganz im Bereich irgendeines der vier Mittellinienabschnitte befindet.

Ausgehend von dem insgesamt bekannt gewordenen Stand der Technik liegt der vorliegenden Erfindung die Aufgabe zugrunde, ein Fördersystem vorzuschlagen, in dem die Transportelemente bei niedrigem Bauaufwand für das Fördersystem eine höchstmögliche Mobilität erreichen. Die Lösung dieser Aufgabe wird durch das Kennzeichen des Anspruchs 1 unter Schutz gestellt. Es wird ein Fördersystem geschaffen, das Bewegungen erlaubt, die sowohl rein translatorisch als auch kombiniert mit rotatorischen Anteilen erfolgen. Weiterhin kann hiermit der Transport auf geraden oder gekrümmten Bahnen erfolgen. Auch ist ein Abzweig über Weichen sowie ein seitliches Verschieben möglich. Die bisher erforderlichen Drehtische und Hilfsfördersysteme für Umlenkungen fallen bei dem erfindungsgemäßen Fördersystem weg und es wird wenn das Fördersystem in einer Ebene verlegt ist auch bei mehreren hintereinander angeordneten Rollen eine freizügige Bewegung von Transportelementen ermöglicht.

Die erfinderischen Merkmale des Anspruchs 2 zeigen, wie im Bereich vorgesehener Richtungsänderungen im Schienensystem mittels Bewegungsflächen und Führungselementen das Transportelement eindeutig bewegt wird.

In Ausgestaltung hierzu lehrt das Kennzeichen des Anspruchs 3, wie durch zusätzliche Halte- und Positioniereinrichtungen eine gesteuerte Bewegung von Transportelementen durchgeführt werden kann. Diese Steuerung kann z. B. durch einen Rechner bestimmt werden.

Die kennzeichnenden Merkmale des Anspruchs 4 beschreiben den Eigenantrieb eines Transportelements in einem erfindungsgemäßen Fördersystem und das Kennzeichen des Anspruchs 5 bezieht sich auf die Ausgestaltung des Schienensystems um auf diesem Transportelemente ohne eigenen Antrieb bewegen zu können.

Die Ausgestaltung nach Anspruch 6 zeigt eine weitere Verbesserung die zur Steigerung der Mobilität der Transportelemente beiträgt. Die Ausgestaltung gemäß Anspruch 7 zeigt eine Vereinfachung im Schienensystem.

Durch das vorgeschlagene Fördersystem wird die bisherige auf Schienen üblicherweise bekannte Transportweise mittels Rädern mit Spurkranz verlassen, ohne die Schwierigkeiten in Kauf zu nehmen, wie sie bisher beim Kreuzen anderer Spuren oder beim seitlichen Abzweigen nicht vermeidbar waren. Durch die vorliegende Erfindung wird ein stabiler Transport dadurch erreicht, daß gegenüberliegende Kugelrollen gegeneinander längsversetzt angeordnet sind und bei Überqueren kreuzender Stränge dadurch ständig mindestens zwei in Fahrtrichtung wesentlichen Abstand aufweisende Kugelrollen seitlich geführt werden können. Damit können Kreuzungs- und Weichensysteme in einfachster Weise verwirklicht werden. In der nachfolgenden Beschreibung wird anhand der Zeichnungen die Erfindung näher erläutert. Hierbei zeigen :

Figur 1a u. b die erfindungsgemäße Anordnung von Kugelrollen

Figur 2 eine Führungsanordnung bei orthogonalem Parallelabzweig

Figur 3a-d Reibrollenantriebe im Fördersystem Gleiche Bauteile in den Figuren werden mit denselben Bezugszeichen versehen.

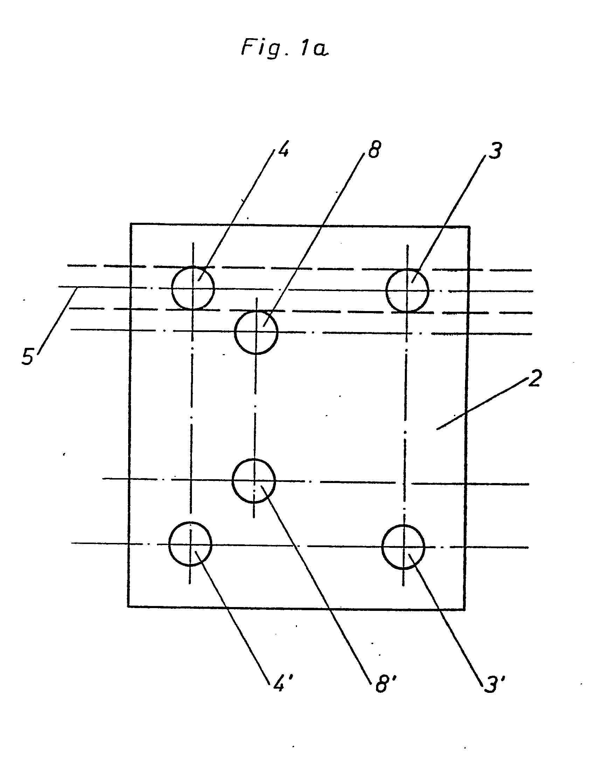

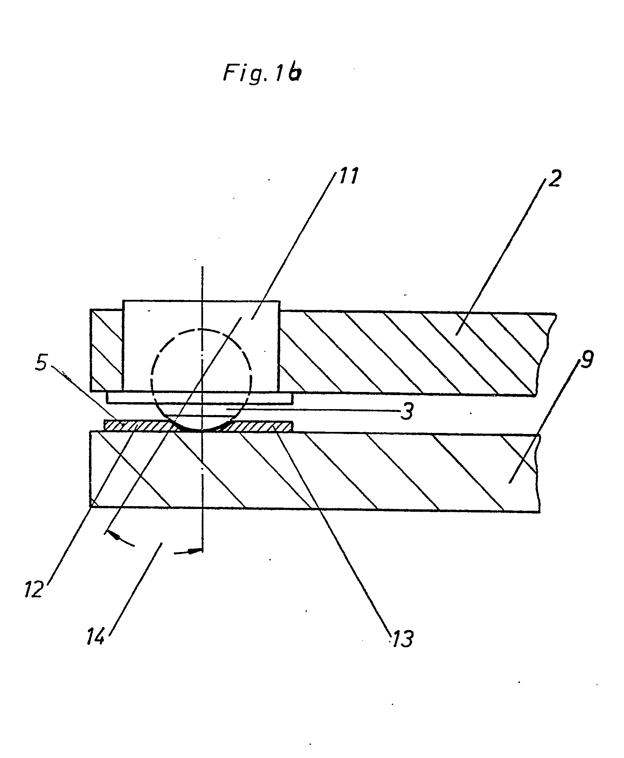

Figur 1a zeigt eine Anordnung, bei der 6 Kugelrollen 3, 3', 4, 4' und 8, 8' das Transportelement 2 über ein Schienensystem bewegen. Diese Figur zeigt ebenfalls nur eine einzige Schienenbahn 5, während die für die Führungen der weiteren Kugelrollen vorgesehenen Schienenbahnen nur im Bereich von Abzweigungen vorkommen und dadurch auf ein Minimum reduziert wurden. Hierdurch wird offensichtlich, daß beim geradlinigen und kurvengeführten Transport von Transportelementen jeweils die am günstigsten gelegenen Kugelrollen zur seitlichen Führung herangezogen werden können und hierdurch nicht nur Schienenbahnen eingespart werden sondern auch ein Ausrichten der Schienenbahnen entfällt. Im Bereich von Kreuzungen wird auf kurzen Strecken zeitweilig eine Seitenführung von mehr als zwei Kugelrollen des Transportelements bewirkt. Im Falle des Ausführungsbeispiels nach Fig. 1a bewegen sich die Kugelrollen 8, 8', 4' und 3' auf einer Rollbahn 9, die keinerlei seitliche Führungen aufweist.

In Ausgestaltung des erfinderischen Schienensystems kann bei geradliniger Förderung die Schienenbahn 5 in der Rollbahn 9 voll integriert sein, so daß beim Verlegen einer Rollbahn auf Flur oder auf einem Gestell lediglich einzelne integrierte Abschnitte, bestehend aus Rollbahn 9 und Schienenbahn 5, als Module aneinandergereiht zum Aufbau des Fördersystems hintereinander in beliebigen Längen angeordnet werden können. An Kreuzungsstellen, Abzweigstellen oder an Stellen, bei denen das Fördersystem mit anderen weiterführenden Systemen, beispielsweise Regalen oder Transporteinheiten, zum Weitertransport verbunden werden muß, werden entsprechende als Module ausgebildete Bewegungsflächen 10, wie sie in den nachfolgenden Figuren beschrieben werden, eingefügt. Damit wird ein leicht überschaubares und leicht montierbares Fördersystem mit Transportelementen, die sich auf Kugelrollen abstützen, geschaffen.

Die Anordnung der Kugelrollen 3, 3', 4, 4' und 8, 8' gemäß Fig. 1a, die insbesondere beim Transport von Schwerlasten auf Transportelementen 2 benutzt wird, ermöglicht ein sicheres und stabiles Führen von Transportelementen 2 auf Bewegungsflächen 10.

Die in Fig. 16 schematisch dargestellte Kugelrolle 3 ist als kopfständige Kugelrolle ausgebildet und in einem Gehäuse 11 gelagert. Das Gehäuse 11 ist am Transportelement 2 befestigt, das im Ausführungsbeispiel als rollbare Transportpalette dargestellt wird. Die Schienenbahn 5 ist so gestaltet, daß sich die Kugelrolle 3 beim Abrollen an Anlaufflächen 12, 13 abstützen kann. Durch die Wahl des Berührungswinkels 14 zwischen der Kugelrolle 3 und den Anlaufflächen 12, 13 ist die Seitenführung der Kugel vorwählbar. Die Schienenbahn 5 ist gemäß Fig. 16 mit der Rollbahn 9 verbunden. Die Bewegungsrichtung der Kugelrolle 3 mit dem Transportelement 2 auf der Schienenbahn 5, die sich auf der Rollbahn 9 abstützt, ist aus der Zeichenebene heraus oder in diese hinein anzunehmen.

Wie bereits ausgeführt, können ein oder mehrere Transportelemente 2 auf geradlinigen Schienenbahnen 5, 6 laufen. Es kann aber auch die Schienenbahn 5 bzw. 6 eine konstante oder auch veränderliche Krümmung besitzen. Darüberhinaus kann die Schienenbahn 5, 6 geneigt oder steigend verlegt sein. In allen Fällen ist ein eindeutig geführter Transport möglich.

Im Bereich von Bewegungsflächen 10, wie sie in den nachfolgenden Figuren näher erläutert werden, wird mittels dieses Fördersystems ein eindeutiger Transport von Transportelementen über Weichen, Kreuzungen, Kreuzungsweichen und bei einer seitlichen Parallelverschiebung bzw. einer seitlichen und nachfolgenden Längsparallelverschiebung eine eindeutige Führung mit geringstmöglichem Aufwand bewirkt. Ebenso ist ein Drehen des Transportelements 2 mit Transportgut um beliebige Winkel möglich. Durch diese Flexibilität wird darüberhinaus erreicht, daß das Beschicken oder Entladen eines Transportelements 2 mit zu transportierenden Gütern oder eine Manipulation an den Gütern, beispielsweise im Verlauf einer Fertigungs- oder Kontrollstrecke, bei der die Güter auf dem Transportelement 2 verbleiben, ohne weiteres möglich ist. Bei kurzzeitiger Zwischenspeicherung von zu transportierenden Gütern in einer Ebene können diese ebenfalls auf Transportelementen 2 verbleiben. Das ist in der Serienfertigung von beachtlichem Vorteil. Dabei können die einzelnen Transportelemente 2 hintereinander zwischengespeichert und wieder in den Fertigungs- oder Kontrollauf eingeschleust werden.

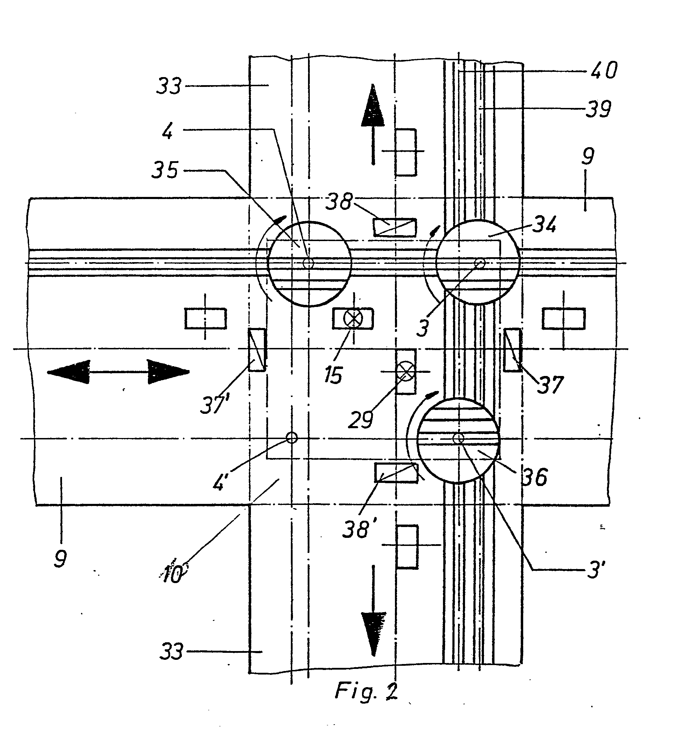

Sind neben der in Hauptförderrichtung liegenden Rollbahn 9 weitere parallele Bahnen vorhanden und soll das Transportelement 2 von der Hauptförderrichtung in eine der parallelen Nebenförderstrecken gebracht werden, so sind die in Figur 2 dargestellten Führungsanordnungen auch an den Bewegungsflächen von Seitenabzweigen und parallelen Nebenförderstrecken vorhanden.

Soll ein Transportelement 2 in von der Hauptförderrichtung abzweigende Bahnen 33 gebracht werden, wird das Transportelement 2 mit seinen Kugelrollen 3, 4 und 3' auf der Bewegungsfläche auf drehbare Führungen 34, 35, 36 aufgefahren, während die Kugelrolle 4' frei beweglich bleibt. Durch Halte- und Positioniereinrichtungen 37, 38, 37', 38' wird das Transportelement 2 bei einer Drehung der drehbaren Führungen 34, 35, 36 um 90° arretiert. Nach Lösen der Arretierung können die Kugelrollen 3, 3', 4 sofort in Doppelschienen 39, 40 senkrecht zur Hauptförderrichtung abgezogen werden. Der Abstand der Doppelschienen 39, 40 voneinander entspricht dem Versatz der Kugelrollen 3, 3' gegeneinander. Beim Abtransport des Transportelements 2 auf der Arbeitsbahn 33 wird das in Hauptförderrichtung zeigende Reibrad 15 abgesenkt und die Zufuhrreibrollen 29 gegen die Unterseite des Transportelements 2 zum Transport gepreßt. Die Halte- und Positioniereinrichtungen 37, 38, 37', 38' werden ebenfalls zurückgezogen. Durch diese Maßnahme ist es möglich, neben der Hauptförderrichtung angeordnete Arbeitsplätze anzufahren.

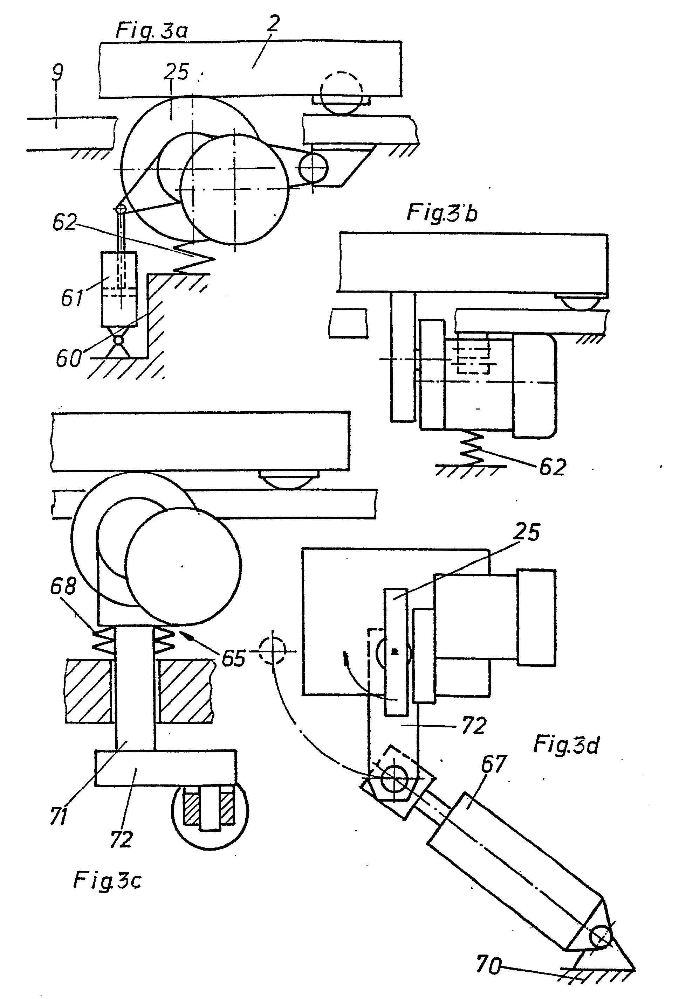

In Fig. 3 a und b ist ein Schnitt und eine Seitenansicht der in der Vorrichtung benutzten Reibrollenantriebe 25 dargestellt, wobei die Reibrollen 25 sich federbelastet am Transportelemente 2 abstützen und durch Antrieb dieses über die Rollbahn 9 bewegen. Im Schnitt und in der Ansicht nach Fig. 3a und 3b wird die angetriebene Reibrolle über eine in einem Fundament 60 angeordnete Hubeinrichtung 61 im Bereich von Kreuzungen entsprechend zurückgezogen. Im Antriebsfall wird die Reibrolle 25 an das Transportelement 2 durch eine Feder 62 angepreßt.

Die in Fig. 3c dargestellte Seitenansicht und die in Fig. 3d dargestellte Draufsicht auf ein lenkbares Reibrollenelement 65 zeigt, wie mit Hilfe einer weiteren Anpressmöglichkeit der Reibrolle 25, beispielsweise durch Tellerfedern 68, eine Lenkung der Reibrolle 25 durch ein Stellelement 67 bewirkt wird. Hierbei stützt sich das Stellelement 67 auf einem Fundament 70 ab und ist mit dem Schaft 71 der Reibrolle 25 über ein Zwischenstück 72 verbunden, so daß bei Bewegung des Stellelements 67 eine eindeutige Lenkbewegung über das Zwischenstück 72 auf die Reibrolle 25 übertragen wird.

### Patentansprüche

1. Fördersystem mit einem sich auf Kugelrollen abstützenden Transportelement und einem die Kugelrollen führenden Schienensystem, wobei bei Verwendung von mehr als vier Kugelrollen (3, 3', 4, 4', 8, 8'), diese auf mindestens drei Bahnen verteilt sind und im Bereich von vorgesehenen Abzweigungen innerhalb des Schienensystems Führungen für mindestens zwei Kugelrollen vorgesehen sind und das Transportelement (2) antreibbar ist, dadurch gekennzeichnet, daß die in zwei Bahnen gegenüberliegenden Kugelrollen zueinander versetzt sind. .

2. Fördersystem nach Anspruch 1, dadurch gekennzeichnet, daß im Bereich von vorgesehenen Richtungsänderungen im Schienensystem (5, 6, 5', 9) Bewegungsflächen (10) vorgesehen sind, daß auf den Bewegungsflächen (10) bewegliche arretierbare und feste Schienenstücke für die Führung mindestens zweier Kugelrollen vorgesehen sind.

3. Fördersystem nach Anspruch 2, dadurch gekennzeichnet, daß die Führungsflächen Halte- und Positioniereinrichtungen (37, 37', 38, 38') für die Transportelemente (2) tragen.

4. Fördersystem nach Anspruch 1, dadurch gekennzeichnet, daß am Transportelement (2) mindestens ein mit dem Schienensystem zusammenwirkendes Reibrad (15) vorgesehen ist und daß das Reibrad (15) entsprechend der vorgegebenen Streckenführung wahlweise in oder entgegen der Förderrichtung antreibbar ist.

5. Fördersystem nach Anspruch 1, dadurch gekennzeichnet, daß im Schienensystem antreibbare Reibräder (15) vorgesehen sind, die im wesentlichen parallel zur jeweiligen Schienenbahn (5, 5', 6) ausgerichtet sind und daß die Reibräder (15) mit den Unterflächen der Transportelemente (2) in Wirkverbindung bringbar sind.

6. Fördersystem nach Anspruch 4 oder Anspruch 5, dadurch gekennzeichnet, daß das Reibrad/die Reibräder (15) lenkbar ist/sind.

7. Fördersystem nach Anspruch 1, dadurch gekennzeichnet, daß innerhalb des nicht verzweigten Schienensystems zwei Kugelrollen einer Seite seitlich durch Anlaufflächen (12, 13) geführt sind.

### Claims

1. A conveyor system with a carrier element supported on ball rollers and a rail system guiding the rollers, in which when using more than four rollers (3, 3', 4, 4', 8, 8') these are distributed on at least three tracks and in the regions where branches within the rail system are expected, guides for at least two rollers are provided, and the carrier element (2) is drivable, characterised in that the opposite rollers in two tracks are relatively staggered.

2. A conveyor system according to Claim 1, characterised in that, in the regions where changes of direction in the rail system (5, 6, 5', 9) are expected, movement areas (10) are provided, and that the movement areas movable and lockable as well as fixed rail portions are provided for the guidance of at least two ball rollers.

3. A conveyor system according to Claim 2, characterised in that the guide surfaces carry holding and positioning devices (37, 37', 38, 38') for the carrier elements (2).

4. A conveyor system according to Claim 1, characterised in that at the carriers element (2) at least one friction wheel (15) is provided, which wheel is drivable according to the predetermined routing alternatively in or counter to the conveying direction.

5. A conveyor system according to Claim 1, characterised in that friction wheels (15) are provided in the rail system, which wheels are directed substantially parallel to the rail track (5, 5', 6) being used, and that the wheels (15) can be brought into operating relationship with the under surfaces of the carrier element.

6. A conveyor system according to Claim 4 or 5, characterised in that the friction wheel(s) (15) is/are steerable.

7. A conveyor system according to Claim 1, characterised in that within the unbranched rail system two ball rollers of one side are guided laterally by abutment surfaces (12, 13).

### Revendications

1. Système de convoyeur comportant un élément de transport s'appuyant sur des rouleaux à bille et un réseau de rails guidant les rouleaux à bille, les rouleaux à bille (3, 3', 4, 4', 8, 8') étant, lorsqu'on en utilise plus de quatre, répartis sur un moins trois voies, des glissières étant prévues dans la zone des embranchements prévus à l'intérieur du réseau de rails pour au moins deux rouleaux à bille, et l'élément de transport (2) pouvant être entraîné, caractérisé en ce que les rouleaux à bille se faisant face sur deux voies sont décalés l'un par rapport à l'autre.

2. Système de convoyeur selon la revendication 1, caractérisé en ce que des surfaces de déplacement (10) sont prévues dans la zone des changements de direction prévus dans le réseau de rails (5, 9) et en ce que des sections de rail mobiles, blocables et fixes sont prévues sur les surfaces de déplacement (10) pour guider au moins deux rouleaux à bille.

3. Système de convoyeur selon la revendication 2, caractérisé en ce que les surfaces de guidage comportent des dispositifs de retenue et de positionnement (37, 37', 38, 38') pour les éléments de transport (2).

4. Système de convoyeur selon la revendication 1, caractérisé en ce que l'élément de transport (2) comporte au moins une roue à friction (15, 25) coopérant avec le réseau de rails, et en ce que la roue à friction (15, 25) peut être entraînée, selon le parcours prédéterminé, à volonté dans le sens de transport ou en sens inverse (7 ou 24).

5. Système de convoyeur selon la revendication 1, caractérisé en ce que des roues à friction entraînables (15, 25) sont prévues dans le réseau de rails, roues qui sont orientées sensiblement parallèlement aux voies respectives (5), et en ce que les roues à friction (15, 25) peuvent être mises en liaison avec les surfaces inférieures des éléments de transport (2) de façon à coopérer avec elles.

6. Système de convoyeur selon la revendication 4 ou 5, caractérisé en ce que la (ou les roues) à friction (15, 25) est (ou sont) orientables.

7. Système de convoyeur selon la revendication 1, caractérisé en ce que deux rouleaux à bille d'un côté sont guidés latéralement par des surfaces montantes (12, 13) à l'intérieur du réseau de rails non ramifié.

*Fig. 1a*

Fig. 1b

Fig. 2

Fig. 3a

9

25

2

62

61

60

Fig. 3 b

62

68

65

25

71

72

72

67

Fig. 3c

70

Fig. 3d

4